# EUROPEAN PATENT APPLICATION

(11) **EP 2 645 275 A1**
(43) Date of publication of application: **02.10.2013**
(21) Application number: 12305383.7
(22) Date of filing: 30.03.2012
(51) Int. Cl.: G06F 17/30, G06F 21/32, G06F 21/34, G06F 21/35, G06F 21/62

(54) **Method, device and system for accessing a service**

(71) Applicant: Gemalto SA, 92190 Meudon (FR)
(72) Inventor: Garreau, Eric, 13705 La Ciotat (FR); Guerin, François, 13705 La Ciotat (FR); Barral, Claude, 13705 La Ciotat (FR)

(57) **Abstract**

The invention relates to a method 20 for accessing a service.

According to the invention, the method comprises the following steps. A device 16 or a token 18 coupled to the device compares, at least once,
- at least one image captured by at least one camera to at least one predetermined biometric data relating to at least one authorized user; and/or
-at least one sound captured by at least one microphone to at least one predetermined sound relating to at least one authorized user.

And if the captured image does or does not match the predetermined biometric data relating to at least one authorized user and/or if the captured sound does or does not match the predetermined sound relating to at least one authorized user, then the device or the token authorizes or forbids to access at least one requested service respectively.

The invention also relates to corresponding device and system.

## Description

### Field of the invention:

The invention relates generally to a method for accessing a service. Furthermore, the invention also pertains to a device for accessing a service. Finally, the invention also relates to a system for accessing a service.

### State of the art:

It is known to access an application that runs on a Personal Computer (or PC), as device, while using user credentials.

However, there is no way to know whether an authorized user is or is not physically present in front of the PC.

There is a need to provide a solution that allows knowing whether an authorized user is physically present in front of the PC, so as to access an application that offers a corresponding service.

### Summary of the invention:

The invention proposes a solution for satisfying the just herein above specified need by providing a method for accessing a service.

According to the invention, the method comprises the following steps. A device or a token coupled to the device compares, at least once,
- at least one image captured by at least one camera to at least one predetermined biometric data relating to at least one authorized user; and/or
- at least one sound captured by at least one microphone to at least one predetermined sound relating to at least one authorized user.

And, if the captured image does or does not match the predetermined biometric data relating to at least one authorized user and/or if the captured sound does or does not match the predetermined sound relating to at least one authorized user, then the device or the token authorizes or forbids to access at least one requested service respectively.

The principle of the invention consists in using, at a device side, one or several cameras allowing to take one (or several) surrounding image(s) and/or one or several microphones allowing to take one (or several) surrounding sound(s), so as to recognize a presence of an authorized user(s) and, when recognized, to let her/him (or them) access a desired service.

It is to be noted that the desired service may be an application that is to be run or executed either locally at the device side, namely by the device or by an entity that is connected or coupled to the device, or remotely at a distant entity which the device is connected to.

It is noteworthy that either the device or a token coupled to the device carries out a comparison between a collected image(s) and a reference (or predetermined) biometric pattern(s) relating to one or several user(s) and/or a comparison between a collected sound(s) and a reference (or predetermined) sound(s) relating to one or several user(s).

A recognition of an authorized user(s), as her/his(their) identification and authentication, is based upon a matching between a collected image(s) and a reference biometric pattern(s) of the authorized user(s) and/or a matching between a collected sound(s) and a reference sound(s) of the authorized user(s) respectively.

When an authorized user(s) is not recognized further to a carried out comparison(s), the authorized user(s) being thus not present, no access to a requested service is granted.

The invention allows to ensure a physical presence of an authorized user(s) at the device thanks to her/his(their) recognition and thus to secure access to a desired service only when the authorized user(s) is(are) present.

According to a further aspect, the invention is a device for accessing a service.

According to the invention, the device is equipped with or connected to at least one camera and/or at least one microphone. The device is adapted to compare, at least once,
- at least one image captured by at least one camera to predetermined biometric data relating to at least one authorized user, and/or
- at least one sound captured by at least one microphone to at least one predetermined sound relating to at least one authorized user.

And the device is adapted to authorize or forbid to access at least one requested service if the captured image does or does not match the predetermined biometric data relating to at least one authorized user and/or if the captured sound does or does not match the predetermined sound relating to at least one authorized user respectively.

As device, it may be a (user) terminal, like a PC, or a token that integrates and/or accesses a camera(s) and/or a microphone(s).

According still to a further aspect, the invention is a system for accessing a service.

According to the invention, the system comprises at least one camera and/or at least one microphone, a host device and a token. The token is coupled or connected to the host device. The host device or the token comprises or is connected to the at least one camera and/or the at least one microphone. The host device or the token is adapted to:
- compare, at least once,
- at least one image captured by at least one camera to predetermined biometric data relating to at least one authorized user, and/or
- at least one sound captured by at least one microphone to at least one predetermined sound relating to at least one authorized user.

And the host device or the token is adapted to authorize or forbid to access at least one requested service if the captured image does or does not match the predetermined biometric data relating to at least one authorized user and/or if the captured sound does or does not match the predetermined sound relating to at least one authorized user respectively.

As token, it may be a Universal Serial Bus (or USB) type dongle, a smart card, as removable token, to be coupled to a terminal or a chip intended to be fixed, possibly in a removable manner, to a terminal, as hosting device.

As device, it may include, among others, a mobile (tele)phone, a tablet, as mobile handset, a desktop, a laptop, a camera, an audio and/or video player.

### Brief description of the drawings:

Additional features and advantages of the invention will be more clearly understandable after reading a detailed description of one preferred embodiment of the invention, given as an indicative and non-limitative example, in conjunction with the following drawings:
- Figure 1 illustrates a simplified diagram of one embodiment of a system for accessing a service offered by a remote server, a PC connected to both the server and a USB type dongle, as token belonging to a user whose presence is surveyed at the PC, according to the invention; and
- Figure 2 represents an example of one message flow between the server, as service provider, the PC and the token of Figure 1, so as to grant, only when the token user is(are) in front of the PC, a service delivered by the server.

### Detailed description:

Herein under is considered a case in which the invention method for accessing a service is implemented by a USB type dongle, as removable token and device for accessing a service, that is coupled to a PC, as user terminal.

Within the present description, a token is a smart object that is intended to communicate with the outside world.

Naturally, the herein below described embodiment is only for exemplifying purposes and is not considered to reduce the scope of the invention.

For example, instead of being a USB type dongle, the token may be a smart card or any other electronic medium that may have different form factors while including a chip.

According to another embodiment, the token may also be a chip soldered, possibly in a removable manner, to a PC, as host(ing) device.

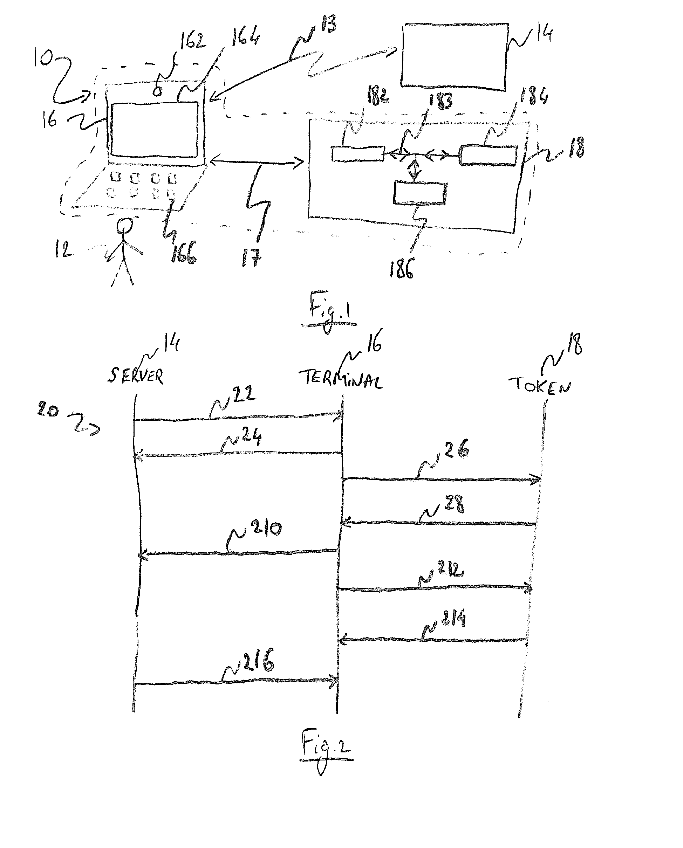

Figure 1 shows schematically a system 10 for accessing a service.

A user 12 that is present at the system 10 desires to access an application (i.e. a software) to be run by a remote server 14 that supports it.

According to another embodiment (not represented), instead of a remote server, a (user) terminal supports an application to be run.

According to another embodiment (not represented), instead of a remote server, a terminal that is coupled or connected to a local entity, like a token, that supports an application to be run.

Such a system 10 includes, at a client side, a PC 16, as user terminal, and a USB type dongle 18, as removable token.

For sake of simplicity, the remote web server 14 and the USB type dongle 18 are termed hereinafter the server 14 and the token 18 respectively.

The user 12 may have subscribed to the server 14 one or several services.

It is to be noted that only one system 10 is represented for clarity reason. However, the server 14 is connected to a plurality (or fleet) of such systems.

According to the described embodiment, each PC 16 is controlled by the token 18, so as to access securely the server 14.

According to another embodiment, each PC 16 controls, on its own, access to the server 14.

The PC 16 is connected, through a bi-directional link 13, over one (or several) data communication network(s) (not represented), such as an Internet network, to the server 14.

The server 14 may be included within an OTA (acronym for "Over The Air") and/or an OTI (for "Over The Internet") platform(s).

The server 14 is a computer and includes a microprocessor (not represented), as data processing means.

The server 14 supports, for instance, an application that, when running, allows providing a service(s) requested, through the PC 16, by the user 12.

A requested service may be a service for accessing, in a remote manner, an application, like a work tool allowing to work out of premises of an employer of the user 12. For instance, the user 12 may be a developer of a software program and needs to access securely to a source code through the server 14.

A requested service may be an online game.

The system 10 may be located within an individual house.

The server 14 application is able to identify a user 12. The server 14 application is also able to preferably authenticate her/him, thanks to, for instance, user credentials to be supplied automatically by a server application interlocutor, like the PC 16 or the token 18. Such a user authentication allows preventing access to an unauthorized person(people).

The server 14 includes or accesses a memory (not represented), as server memory.

The server memory may store one or several terminal addresses, as identifiers of its interlocutors.

The server memory stores preferably, for each user, its user credentials, like a user identifier and/or a password. The user credentials are preferably to be submitted at a first request for accessing the requested service supported by the server 14.

The server memory may register at least one key to be used for encrypting and/or decrypting data to be exchanged with each server interlocutor, so as to prevent disclosure of the data thus exchanged. The server 14 is therefore able to protect data exchanged with its interlocutor. The registered key may be a public key related to either a PC 16 or a token 18 coupled to the PC 16, as server interlocutor.

Optionally, prior to a sending of data to its interlocutor, the server 14 is arranged to apply to the data an integrity algorithm to be used to protect the data in its integrity. Thus, the server interlocutor, either a PC 16 or a token 18 coupled to the PC 16, is able to detect whether the received data has or has not been modified or altered.

Optionally, the server 14 is arranged to sign data to be sent to its interlocutor. Such a signature allows authenticating (or proving that) a sender of the data, namely the server 14. To sign the data, the server 14 encrypts it by using a predetermined encryption algorithm and a predetermined encryption key that are both stored within the server memory. The encryption key is preferably related to the server 14, as private key. The interlocutor, either the PC 16 or the token 18, decrypts corresponding encrypted data by using a predetermined decryption algorithm and a predetermined decryption key that are both stored within the server interlocutor memory. The decryption key is preferably a public key relating to the server 14 that has been deduced from the server private key. According to one embodiment, the encryption key and the decryption key constitute one and the same key, as a key shared between the server 14 and its interlocutors, namely a fleet of PCs or tokens.

The server 14 may be able to delegate to another server (not represented) connected to the server 14 at least one security function, like user authentication, data decryption, data encryption, confidentiality, signature, verification of data integrity, and/or application to data of an integrity algorithm.

The server 14 is accessible from at least the PC 16, as user terminal.

The server 14 may be accessible, via at least one communication network, like an Internet network and/or a mobile radio-communication network, from the PC 16.

According to another embodiment (not represented), instead of a remote server, the server is embedded within an entity, like a token, and is locally accessible, i.e. up to 10 m via a short range Radio-Frequency (or RF) link, from the PC 16, as user terminal.

The PC 16 is connected, via a wire and/or wireless link 13, to the server 14.

Such a link 13 enables to exchange data in two ways between the server 14 and the PC 16.

The link 13 may relate to a long range RF link(s). The long range RF link(s) may be fixed at several hundreds of MHz, for instance, around 850, 900, 1800, 1900 MHz, 2 GHz or more.

The long range RF link(s) may be related to a Wi-Fi type technology that allows exchanging typically data, at 2.4 GHz, up to 32 m.

The link 13 may relate to a short range RF link(s).

The short range RF link(s) may be fixed at 13.56 MHz that allows exchanging data typically up to 20 cm.

The short range RF link(s) may be related to a Near Field Communication (or NFC) type technology compliant with International Organization for Standardization ISO 14443.

The short range RF link(s) may be related to a Bluetooth type technology that allows exchanging data typically up to 10 m.

The PC 16 is preferably equipped with a camera 162.

The camera 162 allows capturing one or several images of its surrounding environment.

The camera 162 may aim at a face, an eye(s) and/or any other body part(s) relating to a user that should be placed in front of the PC 16 and to be detected through the camera 162.

If any searched body part(s) is(are) detected, then an authorized user(s) is(are) physically present in front of the PC 16 and is(are) therefore authorized to access a service supported by and requested to the server 14.

Alternately, instead of incorporating a camera, the PC 16 is connected to a camera.

According to another embodiment, the PC 16 is equipped with and/or connected to at least two or more cameras.

The PC 16 includes preferably a display screen 164 and a keyboard 166, as Man Machine Interface (or MMI).

According to a particular embodiment (not represented), instead of two separate elements as MMI, the PC 16 includes a touch sensitive display screen that displays a keyboard, when activated.

The PC 16 is preferably equipped with or connected to one or several microphones (not represented).

The PC 16 includes a microprocessor (not represented), as means for processing data, at least one memory (not represented) for storing data and at least one Input/Output (or I/O) interface (not represented) for exchanging data with the outside of the PC 16.

The PC 16 memory(ies) may store predetermined biometric data relating to one or several authorized users.

The predetermined biometric data may have been defined, prior to an access to the server 14, during a configuration phase with which each authorized user uses the PC 16 (or another user terminal) to collect or capture one or several images, through the camera 162, to be registered.

The predetermined biometric data may include particular body part print pattern(s) or reference(s), like image pattern(s), such as a face and/or an iris pattern(s), which is(are) specific to each authorized user.

The PC 16 memory(ies) may store one or several predetermined sounds relating to one or several authorized users, as voice print pattern(s) or reference(s) which is(are) specific to each authorized user.

The predetermined sounds relating to one or several authorized users may have been defined, prior to accessing the server 14, during a configuration phase with which each authorized user uses the PC 16 (or another user terminal) to collect or capture one or several sounds, through the microphone(s), to be registered.

Only the authorized user(s), once recognized through its(their) voice and/or body part print(s), is(are) authorized to access at least one service provided through or by the server 14 and requested by the user(s).

The PC 16 I/O interface allows exchanging data with the server 14.

The PC 16 microprocessor (instead of a token 18 microprocessor) may be arranged to compare one or several images captured by the camera (or several cameras) to predetermined biometric data relating to the authorized user(s). The PC 16 microprocessor (instead of a token 18 microprocessor) may be further arranged to authorize or forbid to access one or several requested services. Only when the user(s) has(have) been recognized as authorized user(s), as a result (of an interpretation) of the carried out comparison with respect to the image pattern(s) relating to the authorized user(s), i.e. if the captured image(s) do(es) match the predetermined biometric data relating to one authorized user(s), then the PC 16 authorizes to access one or several requested services. Otherwise, i.e. if the captured image(s) do(es) not match the predetermined biometric data relating to one authorized user(s), then the PC 16 forbids to access one or several requested services.

The PC 16 microprocessor (instead of a token 18 microprocessor) may be arranged to compare one or several sounds captured by the microphone (or several microphones) to one or several predetermined sounds relating to the authorized user. The PC 16 microprocessor (instead of a token 18 microprocessor) may be further arranged to authorize or forbid to access one or several requested services. Only when the user(s) has(have) been recognized as authorized user(s), as a result (of an interpretation) of the carried out comparison with respect to the sound pattern(s) relating to the authorized user(s), i.e. if the captured sound(s) do(es) match the predetermined sound(s) relating to one authorized user(s), then the PC 16 authorizes to access one or several requested services. Otherwise, i.e. if the captured sound(s) do(es) not match the predetermined sound(s) relating to one authorized user(s), then the PC 16 forbids to access one or several requested services.

Thanks to a recognition of a voice and/or a body part print pattern(s) relating to one authorized user(s), the concerned authorized user(s) is(are) considered as being present in front of the PC 16 and is(are) thus allowed to access a requested service(s).

The PC 16 is able, preferably under a token 18 control, to command to continue, when the authorized user(s) is(are) recognized, with a data exchange with the server 14, so as to benefit from the service(s) offered through or by the server 14. Otherwise, the PC 16 is able, preferably under a token 18 control, to command to terminate, when the authorized user(s) is(are) not recognized, an access to the server 14.

The PC 16, as host device, is preferentially coupled or connected to a token 18.

The PC 16 I/O interface allows preferably exchanging data with the token 18 while using a predetermined communication protocol. The communication protocol is, for instance, a USB type protocol but may be any other communication protocol allowing to exchange data between the PC 16 and the token 18.

The token 18 is connected, through a bi-directional contact link 17, to the PC 16.

According to another embodiment, the token 18 is connected, through a contact-less link, i.e. a short range RF link, to the PC 16. Such a short range RF link is used for exchanging, between the PC 16 and the token 18, data at a short range distance typically up to around 800 m (such as with a Bluetooth type technology). The RF link may be fixed, for instance, at 13,56 Mhz for NFC with a typical range up to around 20 cm, at 2,4-2,5 GHz with a typical range of around 10 m to around 100 m (for Zigbee (e.g. IEEE 802.15.4), Wi-Fi and Bluetooth or Bluetooth low energy (e.g. IEEE 802.15.1)), from around 2,4 GHz to around 10 GHz (for Ultra Wide Band or UWB e.g. IEEE 802.15.4a).

The token 18 includes a chip (not represented). The chip includes at least one microprocessor 182, as data processing means, at least one memory 184 and at least one I/O interface 186 that are internally all connected, through an internal bidirectional data bus 183, to each other.

The token I/O interface 186 allows communicating data from the internal chip components to the chip exterior and conversely.

The token memory(ies) 184 stores preferably predetermined biometric data relating to one or several authorized users.

The predetermined biometric data may include particular body part print pattern(s) or reference(s), like image pattern(s), which is(are) specific to each authorized user.

The body part print pattern(s), such as a face and/or an iris pattern(s), may include data relating to a face for each authorized user and/or data relating to one or two (eye) irises for each authorized user.

The data relating to a face may contain data relating to a particular pose or attitude of the user like, for instance, data relating to a non-smiling face and/or data relating to a smiling face for each authorized user. The data relating to a face is identifiable or recognizable by an entity which carries out a comparison between a captured image (or photo) and the considered data relating to a face.

The predetermined biometric data has been defined, prior to accessing the server 14, during a configuration phase with which each authorized user captures, through a camera(s), one or several images to be registered. The used camera(s) may be integrated within or connected to either a user terminal or the token 18.

The token memory(ies) 184 store(s) preferably one or several predetermined sounds relating to one or several authorized users, as voice print pattern(s) or reference(s) which is(are) specific to each authorized user.

The predetermined sound(s) may include data relating to a voice for each authorized user.

The data relating to a voice may contain, for instance, data relating to a word a sentence and/or a song pronounced by each authorized user. The data relating to a voice is identifiable by an entity which carries out a comparison between a captured sound and the considered data relating to a voice.

The predetermined sound(s) relating to one or several authorized users has or have been defined, prior to accessing the server 14, during a configuration phase with which each authorized user captures, through a microphone(s), one or several sounds to be registered. The used microphone(s) may be integrated within or connected to either a user terminal or the token 18.

Only the authorized user(s), once recognized through its(their) voice and/or body part print(s), is(are) authorized to access at least one service provided through or by the server 14 and requested by the user(s).

The token memory(ies) 184 may store data relating to a Uniform Resource Identifier (or URI), a Uniform Resource Locator (or URL) and/or an Internet Protocol (or IP) address of an entity, like a remote server, as a remote entity through or by which a service is authorized to be accessed, which a transaction request is to be sent to.

The token memory(ies) 184 stores one or several applications.

The token microprocessor 182 processes, controls and communicates internally data, with all the other components incorporated within the chip and, through the I/O interfaces 186, with the chip exterior.

The token microprocessor 182 executes or runs one (or several) application(s). As application, there is at least one application for accessing a service.

The token microprocessor 182 is preferably adapted to authorize or forbid to access one or several requested services.

Only when the user(s) has(have) been recognized as an authorized user(s), as a result (of an interpretation) of the carried out comparison(s) with respect to the image and/or sound pattern(s) of the authorized user(s), i.e. if the captured image(s)/sound(s) do(es) match the predetermined biometric data/sound(s) relating to one authorized user(s) respectively, then the token 18 authorizes to access one or several requested services. Otherwise, i.e. if the captured image(s)/sound(s) do(es) not match the predetermined biometric data/sound(s) relating to one authorized user(s) respectively, then the token 18 forbids to access one or several requested services.

The token microprocessor 182 is preferably adapted to compare one or several images captured by a camera (or several cameras) to predetermined biometric data relating to the authorized user(s). The camera 182 incorporated within or connected to the PC 16, as user terminal, is preferably used. Alternatively, a camera (not represented) incorporated within or connected to the token 18 may be used.

The token microprocessor 182 may be arranged to compare one or several sounds captured by a microphone (or several microphones) to one or several predetermined sounds relating to the authorized user. A microphone incorporated within or connected to the PC 16, as user terminal, is preferably used. Alternatively, a microphone (not represented) the user terminal or incorporated within or connected to the token 18 may be used.

The token microprocessor 182 may be able to initiate actions, in order to interact directly with the outside world, in an independent manner of its host device. Such a capacity of interaction at the initiative of the token 18 is also known as proactive capacity.

The token 18 is thus able to send, at its own initiative, through the host device, to any device connected to the PC 16, for instance, a proactive command for sending either a command, like a service request, or information, like user data or captured data, to the server 14, as entity to be accessed to obtain a service requested by a user. The token 18 may thus allow detecting, through data captured by a camera(s) and/or a microphone(s), at least one abnormal stress condition, like a particular user attitude or pose or a particular sound or noise. The token 18 may then send the captured data and/or information relating to at least one detected abnormal stress condition to the server 14 or another entity connected to the PC 16.

For instance, as soon as the token 18 carries out a comparison(s) between a captured image(s)/sound(s) and predetermined biometric data/sound(s) relating to an authorized user(s) and obtains a corresponding successful or unsuccessful comparison result, the token 18 may be able to send, at its initiative, to the server 14, a command (or request) for terminating an access to the server 14.

For instance, as soon as the token 18 carries out a comparison(s) between a captured image(s)/sound(s) and predetermined biometric data/sound(s) relating to an authorized user(s) and obtains a corresponding successful or unsuccessful comparison result, the token 18 may be able to send, at its initiative, to the server 14 information relating to the obtained successful or unsuccessful comparison result.

The token microprocessor 182 executes preferably additional security functions.

The security functions may include one or several specific user authentications. According to such a specific user authentication(s), the token 18 compares, at a predefined time(s), a captured image(s)/sound(s) to a predefined image(s)/sound(s) relating to an authorized user(s) and the token 18 authorizes to access one requested service(s) only if the captured image(s)sound(s) do(es) match the predefined image(s)/sound(s) relating to an authorized user(s). For instance, the token 18 sends, through the PC 16, a message for requesting a user(s) to submit a particular face(s), like a predefined smiling face(s), as a face print pattern(s), and/or a particular voice(s), like a predefined sound(s), as a voice print pattern(s).

The security function may contain one verification(s) by which two items of data, be it either an image or a sound, that may be captured successively or consecutively, is distinct from each other. For instance, the token 18 is able to compare two images/sounds captured by a camera(s)/microphone(s) respectively and, only if the two captured images/sounds do not match respectively, then the token 18 authorizes to access a requested service(s). Such a verification(s) allow(s) ensuring that the image(s)/sound(s) is(are) not fixed or static reducing thereby a risk that a hacker, as non-authorized user, submits an image/sound, as expected image/sound pattern(s) relating to an authorized user respectively.

The security functions may include a user authentication operation that has to be carried out, so as to access the token memory(ies) 184. Such a user authentication operation may consist in verifying that data submitted by an authorized user, such as a Personal Identity Number (or PIN) and/or a fingerprint(s), matches predetermined data that the token memory(ies) 184 store(s).

The security functions may include a user authentication data transfer from the token 18 to an entity to be accessed, so as to benefit from a service to be requested. Such a user authentication data transfer may consist in submitting automatically user credentials to an entity supporting an application requested by the user, as soon as the application (registered as a white list) that the token 18 allows to access.

The user credentials may include a subscriber identifier(s), like an International Mobile Subscriber Identifier (or IMSI), and one or several keys, like ki, allowing to identify and authenticate a subscriber to one or several radio communication networks. The user credentials are used for authenticating the token user to a concerned external entity(ies) supporting the application requested by the user.

The user credentials may comprise an identifier and/or a password.

The security functions may include a white/black entity list(s), as server(s) which is(are) authorized/forbidden to be a token interlocutor(s), so as to get data from it(them).

The security functions may include an encryption/decryption process to be used before sending data to outside/after receiving data from outside, so as to protect access to data managed by the token 18. To encrypt data to be sent, the token 18 uses an encryption key and an encryption algorithm, such as an Advanced Encryption Standard (or AES), a Data Encryption Standard (or DES) or the like, that are stored within the token memory(ies) 184. To decrypt data to be received, the token 18 may use a decryption key and a decryption algorithm, such as an AES, a DES or the like, that are stored within the chip memory 184.

The security functions may include a data signature process to be used prior to a sending of data, so as to prove an origin of data from the token 18. To sign data, the token 18 encrypts it by using predetermined encryption algorithm and key that are both stored within the token memory(ies) 184. The encryption key is preferably related to the token 18, as private key. The interlocutor, i.e. an entity supporting an application to be accessed, decrypts corresponding encrypted data by using predetermined decryption algorithm and key that are both stored within a memory accessible from the entity supporting the application to be accessed. The decryption key is preferably a public key relating to the token 18 that has been generated from the token private key. According to one embodiment, the encryption key and the decryption key constitute one and the same key, as a key shared between the token 18 and its interlocutor, an entity supporting the application requested by the user.

The security functions include preferably an integrity verification process to be used to data after its reception, so as to detect whether received data is or is not modified or altered.

The security functions include preferably an integrity application process to be used to data prior to its sending, so as to allow a corresponding addressee to detect whether data received from the token is or is not modified or altered.

Figure 2 depicts an exemplary embodiment of the invention method 20 for accessing a service accessible through or by the server 14, the PC 16 and the token 18.

It is assumed that the token 18 controls the PC 16 to access securely the server 14. Thus, a single authorized user may benefit from a service offered through or by the server 14 only when she/he is physically present in front of the PC 16 during all a communication session with the server 14.

Likewise, instead of one single authorized user, several authorized users, such as a mother/father and one (or several) child(ren), may be recognized through their respective body part and/or voice print(s) as being simultaneously present in front of the PC 16.

It is assumed that, firstly, after a user application selection through the PC MMI, the PC 16 sends to an application accessible through or from the server 14 a connection request (not represented), like an HTTP command like "get data".

Once connected, the server 14 sends preferentially to the PC 16 a request 22 for getting user credentials.

Then, the PC 16, after a possible previous request (not represented) to either the token 18 or the user 12, sends back to the server 14 user credentials 24. The user credentials are preferably stored within either the PC 16 or the token memory(ies) 184.

The server 14 compares the submitted user credentials to the expected pre-registered user credentials which are accessible at the server 14 side. Only, when the submitted user credentials do match the expected user credentials, the server 14 authorizes the registered user 12 to access a service that she/he requests.

The PC 16 and the server 14 exchange by using a HyperText Transfer Protocol (or HTTP) type protocol. The PC 16 and the server 14 may use any other data exchange protocol allowing to transfer data between them.

The PC 16 and the server 14 exchange preferably data in an encrypted manner, like over a Virtual Private Network (or VPN), so as to protect access to the thus exchanged data. To encrypt/decrypt data, the PC 16 involves the token 18.

The PC 16 registers a first image (or photo) and/or a first sound. The first image is captured preferably from the PC camera 162 that aims at its foreground. The first sound is captured from preferably from the PC microphone.

Once the PC 16 has retrieved first data captured from its camera 162 and/or its microphone, at a predefined time, the PC 16 sends preferably to the token 18 a first request 26 for getting a user authentication accompanied with the first captured data, as first captured image and/or sound.

The token 18 stores preferably the first captured image and/or sound, as first captured data.

The token 18 compares the first captured image to first predetermined biometric data relating to an authorized user and/or sound to sound relating to an authorized user.

If the first captured image and/or sound do(es) not match a first expected image and/or sound that is(are) stored within the token memory(ies) 184 respectively, then the token 18 forbids to access the requested service by sending to the PC 16, for instance, a message (not represented) comprising data relating to an unsuccessful user authentication, as negative response to the previous request. Such a negative response to the previous request may be "KO", a request for disconnecting to the server 14, or a request for terminating an open communication with the server 14. Further to a non recognition of an authorized user, the token 18 lets interrupt or close a connection from the PC 16 to the server 14. Thus, a possible user who is considered as being a non-authorized user is thus disallowed to continue on communicating data with the server 14.

Otherwise, i.e. if the first captured image and/or sound do(es) match a first expected image and/or sound that is(are) stored within the token memory(ies) 184 respectively, the token 18 authorizes to access the requested service by sending to the PC 16, for instance, a message comprising data relating to a successful user authentication, like "OK", as positive response 28 to the first request 26. Further to a recognition of an authorized user, the token 18 authorizes to continue a connection from the PC 16 to the server 14 and the user that is considered as being an authorized user is allowed to continue on communicating data with the server 14.

At least another request for getting a user authentication/response (not represented) may be exchanged between the PC 16 and the token 18.

The PC 16 sends to the server 14 a request 210 for processing data, like a payment or transaction request.

Instead of occurring after a first comparison between the first captured data (image and/or sound) and the first expected data (image and/or sound respectively) relating to an authorized user, the PC 16 sends to the server 14 a request (not represented) for processing data prior to the first comparison.

At least another (second) comparison between captured data (image and/or sound) and expected data (image and/or sound respectively) relating to an authorized user takes place in a preferred manner.

More exactly, the PC 16 registers at least a second image and/or a second sound. The second image is captured preferably from the PC camera 162 that aims at its foreground. The second sound is captured from preferably from the PC microphone.

Once the PC 16 has retrieved second data (image and/or sound) captured from its camera 162 and/or its microphone respectively, the PC 16 sends preferably to the token 18 a second request 212 for getting a user authentication accompanied with the second captured data, as second captured image and/or sound.

The token 18 stores preferably the second captured image and/or sound.

The PC 16 may continue to register regularly, i.e. after a predetermined communication time period, like every 30 s, or at another predefined time, at least other image and/or sound.

Optionally, the token 18 compares the second captured image and/or sound to the first captured image and/or sound respectively, as two successive or consecutive captured data.

If the second captured image and/or sound do(es) match the first captured image and/or sound respectively, then the token 18 forbids to access the requested service. Further to a detection of a static image/sound respectively that may been reproduced or replayed, the token 18 lets close a connection from the PC 16 to the server 14. Thus, a possible user who is considered as being a non-authorized user is thus disallowed to continue on communicating data with the server 14.

Otherwise, i.e. if the second captured image and/or sound do(es) not match the first captured image and/or sound respectively, the token 18 authorizes to access the requested service by sending to the PC 16, for instance, a message comprising data relating to a successful user authentication and non static submitted data, like "OK", as positive response 214 to the first request 212. Further to a recognition of an authorized user with another captured image and/or sound, the token 18 authorizes to continue a connection from the PC 16 to the server 14. Thus, the user who is considered as being an authorized user is allowed to continue on communicating data with the server 14.

Optionally, the token 18 compares the second captured image and/or sound to second predetermined specific biometric data and/or sound respectively that is(are) stored within the token memory(ies). For instance, the second predetermined specific biometric data is a specific image, like a smiling face of the authorized user, while the first predetermined specific biometric data is another specific image relating to the authorized user, like a non-smiling face of the authorized user, to be matched successively. For instance, the second predetermined specific sound is a specific sound, like a word, a sentence or a song of the authorized user, while the first predetermined specific sound is another specific sound of the authorized user, to be matched successively. The PC 16 user may be previously informed about the type of the second predetermined specific biometric data and/or sound that is expected to be matched thanks to a message originating from the token 16, for instance, "please smile" and/or "please say the following word, sentence or song".

If the second captured image and/or sound do(es) not match the second predetermined specific biometric data and/or sound respectively, then the token 18 forbids to access the requested service. Further to a non recognition of an authorized user, the token 18 lets close a connection from the PC 16 to the server 14. Thus, a possible user who is considered as being a non-authorized user is thus disallowed to continue on communicating data with the server 14.

Otherwise, i.e. if the second captured image and/or sound do(es) match the second predetermined specific biometric data and/or sound respectively, the token 18 authorizes to access the requested service by sending to the PC 16, for instance, a message comprising data relating to a successful user authentication, like "OK", as positive response 214 to the first request 212. Further to a recognition of an authorized user with another captured image and/or sound, the token 18 authorizes to continue a connection from the PC 16 to the server 14. Thus, the user who is considered as being an authorized user is still allowed to continue on communicating data with the server 14.

After a while and possibly one or several positive tests, the server 14 sends to the PC 16 a response 216 to the request 210 for processing data, like a payment is accepted by a server managing a user bank account or a transaction response.

The token 18 carries out one or several tests.

As soon as the user 12 leaves the PC 16 for a certain time period during which the token 18 carries out at least one test that reveals that the user 12 is away, the token 18 triggers a closure of the connection between the PC 16 and the server 14.

The positive test(s) is(are) constituted by one (or several) positive result(s) further to one (or several) comparison(s) between captured data (image and/or sound) and expected data (image and/or sound respectively) relating to an authorized user and/or one (or several) negative result(s) relating to one (or several) comparison(s) between successive or consecutive captured data (image and/or sound).

The token 18 thus verifies whether the user 12 is or is not physically present at the user terminal side while analysing whether the test(s) is(are) or is(are) not satisfied.

The token 18 acts as a controller of a connection to be opened and/or the opened connection between the PC 16 and the server 14 at the PC 16 side in an environment which may be not controlled.

The token 18 may allow to capture data, like a surrounding image(s) and/or a surrounding sound(s). The captured data may be compared to predetermined data, as one (or several) abnormal stress condition(s), stored within the token memory(ies) 184. If the captured data do(es) match the predetermined data, then the token 18 sends, through the PC 16, to the server 14 the captured data and/or information relating to a detected abnormal stress condition(s).

The embodiment that has just been described is not intended to limit the scope of the concerned invention. Other embodiments may be given. As another embodiment example, instead of the token 18, a user terminal, as a standalone entity, constitutes a service accessing device that carries out functions that are carried out by the token 18 as described supra.

## Claims

1. A method (20) for accessing a service,
**characterized in that** the method comprises the following steps:
- a device (16) or a token (18) coupled to the device compares, at least once,
- at least one image captured by at least one camera to at least one predetermined biometric data relating to at least one authorized user; and/or
- at least one sound captured by at least one microphone to at least one predetermined sound relating to at least one authorized user; and
- if the captured image does or does not match the predetermined biometric data relating to at least one authorized user and/or if the captured sound does or does not match the predetermined sound relating to at least one authorized user, then the device or the token authorizes or forbids to access at least one requested service respectively.

2. Method according to claim 1, wherein the device or the token stores the predetermined biometric data relating to at least one authorized user and/or the predetermined sound relating to at least one authorized user.

3. Method according to claim 1 or 2, wherein, the device being coupled to or connected to a server (14), the server supporting at least one requested service, the device or the token sends to the server user credentials (24).

4. Method according to any of claims 1 to 3, wherein, after the first comparison between one captured image and/or sound and predetermined biometric data and/or sound relating to at least one authorized user respectively, the method further comprises the following steps:
- the device or the token compares one image and/or sound captured regularly by at least one camera and/or microphone to predetermined biometric data and/or sound relating to at least one authorized user respectively;
- if the lastly captured image/sound does or does not match the predetermined biometric data and/or sound relating to at least one authorized user respectively, then the device or the token authorizes or forbids to access at least one requested service respectively.

5. Method according to claim 4, wherein the device or the token compares:
- two images captured by at least one camera and/or two sounds captured by at least one microphone; and
- if the two images do or do not match and/or if the two sound do or do not match, then the device or the token forbids or authorizes to access at least one requested service respectively.

6. Method according to any of claims 1 to 5, wherein the device or the token compares, at least once, at least one second image captured by at least one camera to at least one predetermined specific second image relating to at least one authorized user; and
if the captured second image does or does not match the predetermined specific second image relating to at least one authorized user, then the device or the token authorizes or forbids to access at least one requested service respectively.

7. Method according to any of claims 1 to 6, wherein the device or the token compares, at least once, at least one second sound captured by at least one microphone to at least one predetermined specific second sound relating to at least one authorized user; and
if the captured second sound does or does not match the predetermined specific second sound relating to at least one authorized user, then the device or the token authorizes or forbids to access at least one requested service respectively.

8. Method according to any of claims 1 to 7, wherein the predetermined biometric data includes, for each authorized user, at least one element of a group comprising:
- data relating to a face;
- data relating to at least one iris.

9. A device (16 or 18) for accessing a service,
**characterized in that**, the device being equipped with or connected to at least one camera (162) and/or at least one microphone, the device is adapted to:
- compare, at least once,
- at least one image captured by at least one camera to predetermined biometric data relating to at least one authorized user, and/or
- at least one sound captured by at least one microphone to at least one predetermined sound relating to at least one authorized user, and
- authorize or forbid to access at least one requested service if the captured image does or does not match the predetermined biometric data relating to at least one authorized user and/or if the captured sound does or does not match the predetermined sound relating to at least one authorized user respectively.

10. A system (10) for accessing a service,
**characterized in that**, the system comprising at least one camera (162) and/or at least one microphone, a host device (16) and a token (18), the token being coupled or connected to the host device, the host device or the token comprising or being connected to the at least one camera and/or the at least one microphone, the host device or the token is adapted to:
- compare, at least once,
- at least one image captured by at least one camera to predetermined biometric data relating to at least one authorized user, and/or
- at least one sound captured by at least one microphone to at least one predetermined sound relating to at least one authorized user, and
- authorize or forbid to access at least one requested service if the captured image does or does not match the predetermined biometric data relating to at least one authorized user and/or if the captured sound does or does not match the predetermined sound relating to at least one authorized user respectively.
